# EUROPEAN PATENT APPLICATION

(11) **EP 2 464 138 A1**
(43) Date of publication of application: **13.06.2012**
(21) Application number: 11191586.4
(22) Date of filing: 01.12.2011
(51) Int. Cl.: H04N 21/466, H04N 21/482, H04N 21/442, H04N 21/4223, H04N 21/44, H04N 21/81, H04H 60/65, H04H 60/31, H04H 60/46, H04H 60/37

(54) **Multimedia system and method of recommending multimedia content**

(30) Priority: 09.12.2010 GB 201020900
(71) Applicant: Samsung Electronics Co., Ltd., Suwon-si, Gyeonggi-do 442-742 (KR)
(72) Inventor: Bernard, Thomas Jean Patrice, Staines, Middlesex TW18 4QE (GB); Toller, Mark Steven, Staines, Middlesex TW18 4QE (GB)
(74) Representative: Davies, Robert Ean

(57) **Abstract**

A multimedia system comprises a content obtaining module arranged to obtain a plurality of available content items for viewing or recording at a selected time, a storage module arranged to store viewing history information for content items that have previously been viewed, the viewing history information being stored in association with at least one time slot, a content rating module arranged to determine a rating for each of the available content items based on the viewing history information for one or more of the time slots that correspond to the selected time and a content recommendation module arranged to generate recommended content items based on the rating. The content rating module is arranged to update the rating for one or more of the recommended content items based on viewing interest information relating to a current viewing session.

## Description

The invention relates to a multimedia system and method of recommending multimedia content. In particular, the invention relates to a system and method of generating recommended content items based on the viewing history information of the viewer.

Multimedia systems have been widely adopted in the home environment. There are now a large number of different sources of multimedia content available to a viewer, providing a wide variety of multimedia content items. As a result, viewers often face a bewildering choice of content.

Multimedia systems are usually shared by a number of viewers, for example, at home between children and parents. In such situations, it is desirable to have a system that can be personalised to suit the preferences of different viewers.

According to an aspect of the invention, there is provided a multimedia system comprising a content obtaining module arranged to obtain a plurality of available content items for viewing or recording at a selected time, a storage module arranged to store viewing history information for content items that have previously been viewed, the viewing history information being stored in association with at least one time slot, a content rating module arranged to determine a rating for each of the available content items based on the viewing history information for one or more of the time slots that correspond to the selected time, and a content recommendation module arranged to generate recommended content items based on the rating.

The multimedia system may also comprise an analysis module arranged to determine viewing interest information relating to a current viewing session.

The content rating module may be arranged to update the rating for one or more of the recommended content items based on the viewing interest information.

The content rating module may also be arranged to update the rating for the one or more recommended content items when the viewing interest information indicates that the viewer has switched away from one of the recommended content items.

The multimedia system may further comprise an input module for receiving a content item selection, wherein the multimedia system is arranged to update the rating of a recommended content item when the input module receives a signal indicating that a subsequent content item has been selected.

The content recommendation module may be arranged to suppress subsequent presentation of the recommended content item until a viewer returns to the beginning of a recommended content list when the rating of the recommended content item within the recommended content item list has been decreased as a result of the viewer switching away from the recommended content item.

The content rating module may be arranged to ignore the information that the viewer has switched away from the recommended content item during the presentation of predetermined types of content item.

One of the predetermined types of content item may be an advertisement break.

The multimedia system may be arranged to monitor for the advertisement break based on one or both of metadata defining an advertisement break and audio-visual parameters relating to the advertisement break.

The audio-visual parameters may comprise one or more parameters relating to volume, luminosity, colour and dynamic range.

The content rating module may be arranged to ignore the viewing interest information when a viewer is not viewing the content item.

The multimedia system may further comprise a detection system, wherein the multimedia system is arranged to determine from data from the detection system whether the viewer is viewing the content item.

The detection system may comprise a camera or a motion detection system.

The analysis module may be arranged to selectively update the viewing history information by storing the viewing interest information that corresponds to the current viewing session in a time slot that corresponds to a time of the current viewing session, depending on whether the viewing interest information for the current viewing session corresponds to the viewing history information.

The analysis module may also be arranged not to update the viewing history information when the viewing interest information for the current viewing session does not correspond to the viewing history information.

The viewing interest information may further comprise information relating to one or more of duration of time for which a content item is viewed, the percentage of the content item that is viewed and whether the content item is viewed to the end.

The time slot may correspond to the selected time when the selected time falls within a time interval defined by the time slot on the same day of the week as the selected time or on a predetermined day or date that corresponds to the selected time.

Each of the content items may be defined by metadata, wherein the metadata comprises one or more of service information for broadcast content, electronic program guide information, and Internet search information based on information extracted from electronic program guide information.

The content rating module may be arranged to determine the rating for each of the available content items by comparing the metadata of the available content items at the selected time and at least one of the metadata and the rating of the corresponding content items stored as the viewing history information.

The available content items include one or more of television content, radio content, Internet content and previously recorded or other non-live content.

The content recommendation module may be arranged to apply a presentation threshold to the rated content items, wherein rated content items having a rating below the presentation threshold will not be presented as recommended content items.

The content recommendation module may be arranged to present information indicating that the viewing interest information for the current viewing session does not correspond to the viewing history information.

The content recommendation module may be further arranged to present information that indicates whether the presented recommended content items are based on the updated ratings of the recommended content items based on the viewing interest information.

According to a further aspect of the invention, there is provided a method of recommending content in a multimedia system, the method comprising determining a plurality of available content items for viewing at a selected time, retrieving stored viewing history information for content items that have previously been viewed, the viewing history information being stored in association with at least one time slot, determining a rating for each of the available content items based on the viewing history information for one or more of the time slots that correspond to the selected time, and generating recommended content items based on the rating.

According to another aspect of the invention, there is provided a computer program for execution by a processor, the program comprising program modules, which when executed by the processor may be arranged to perform acts of determining a plurality of available content items for viewing at a particular time, retrieving stored viewing history information for content items that have previously been viewed, the viewing history information being stored in association with at least one time slot, determining a rating for each of the available content items based on the viewing history information for one or more of the time slots that correspond to the particular time, and generating recommended content items based on the rating.

Embodiments of the invention will now be described, by way of example, with reference to the accompanying drawings, in which:
Figure 1 illustrates a network of multimedia content sources and a multimedia system;
Figure 2 schematically illustrates a content managing module according to an embodiment of the invention;
Figure 3 illustrates a flowchart showing a method of recommending content in a multimedia system according to an embodiment of the invention;
Figures 4a and 4b are tables illustrating examples of viewing history information, according to an embodiment of the invention;
Figure 5 illustrates how the viewing history information may be stored in association with a time slot according to an embodiment of the invention;
Figure 6 illustrates a content rating module which is arranged to rate the available content items based on current information and viewing history information, according to an embodiment of the invention;
Figure 7 illustrates a plurality of time slots for which a rating may be determined, according to an embodiment of the invention;
Figures 8a and 8b illustrate how the ratings may be used to generate recommended content items, according to an embodiment of the invention;
Figure 9 illustrates an example of the zapping sequence according to an embodiment of the invention; and
Figures 10a to 10c illustrate how updated recommended content items may be presented to a viewer, according to an embodiment of the invention.

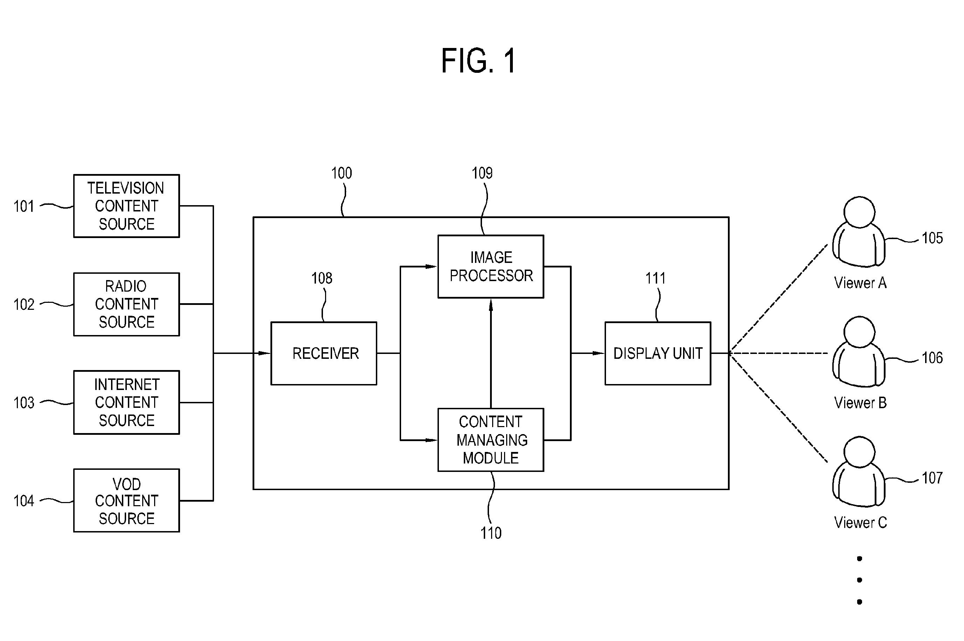

Referring to Figure 1, a network of multimedia content sources 101, 102, 103, 104 available to a viewer of a multimedia system 100 is illustrated. The multimedia system 100 may be shared by multiple viewers 105, 106, 107. The multimedia system 100 may receive content items from a number of content sources which may, for example, include a television content source 101, a radio content source 102, an internet content source 103 and a video-on-demand (VOD) content source 104. The term "content" refers to all types of multimedia content, including but not limited to television, radio, Internet and previously recorded content. For example, content may comprise live television or radio broadcasts transmitted via satellite, by terrestrial, air, cable or Internet Protocol television (IPTV), or any combination thereof. Previously recorded content may comprise content received from a VOD server or a "catch-up TV" server. Content may also comprise interactive content from interactive sources such as news websites or internet TV. Examples of content items include a television channel or programme, a webpage or a radio show.

Each content item may be defined by metadata. The metadata may comprise one or more of service information for broadcast content, electronic program guide (EPG) information, and Internet search information based on information extracted from EPG information.

Service information is available for broadcast content items. Service information may carry information relating to the broadcast content item, such as channel name, content provider, audio and video specifications (e.g. high definition or standard definition) and audio languages. EPG information may contain information relating to content items, such as the start and end times, title, genre, and a short description or synopsis of a programme. The multimedia system 100 may be arranged to acquire additional information from specialised websites using, for example, the title of the program from the EPG information. This information may include release date and ratings from movie rating sites. The synopsis may also be parsed and key information, such as location and cast, extracted to check it against any external sources on the internet. The multimedia system 100 may be further arranged to check how popular the key information is on the internet, for example, retrieving the number of hits on a search engine.

As shown in Figure 1, the multimedia system 100 includes a receiver 108, an image processor 109, a content managing module 110 and a display unit 111. The receiver 108 receives the content from the content sources 101, 102, 103, 104 and provides the content items to the content managing module 110. The multimedia system can, for example, be an Internet enabled television.

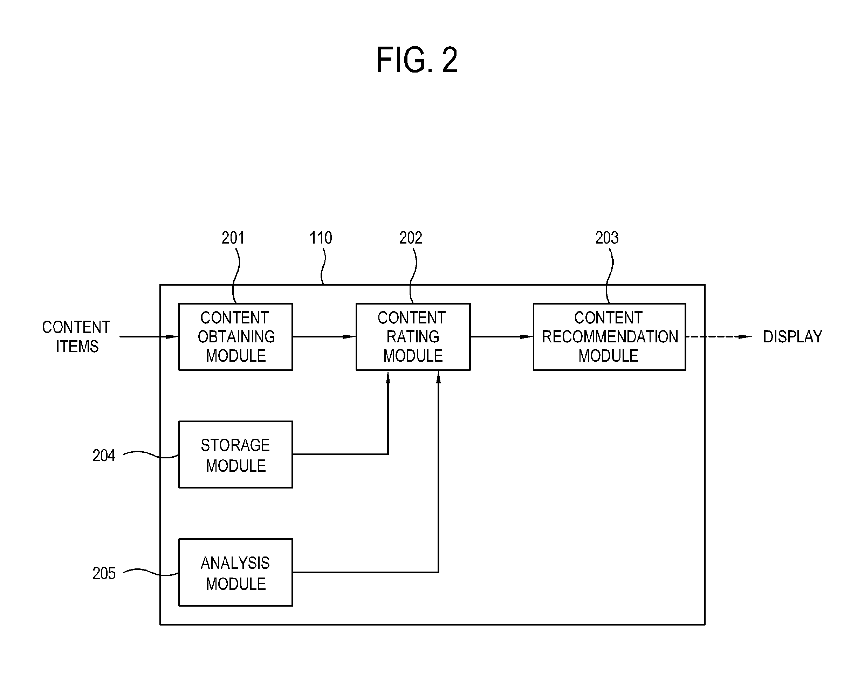

Referring to Figure 2, the content managing module 110 is schematically illustrated. The content managing module 110 comprises a content obtaining module 201, a content rating module 202, a storage module 204, an analysis module 205 and a content recommendation module 203.

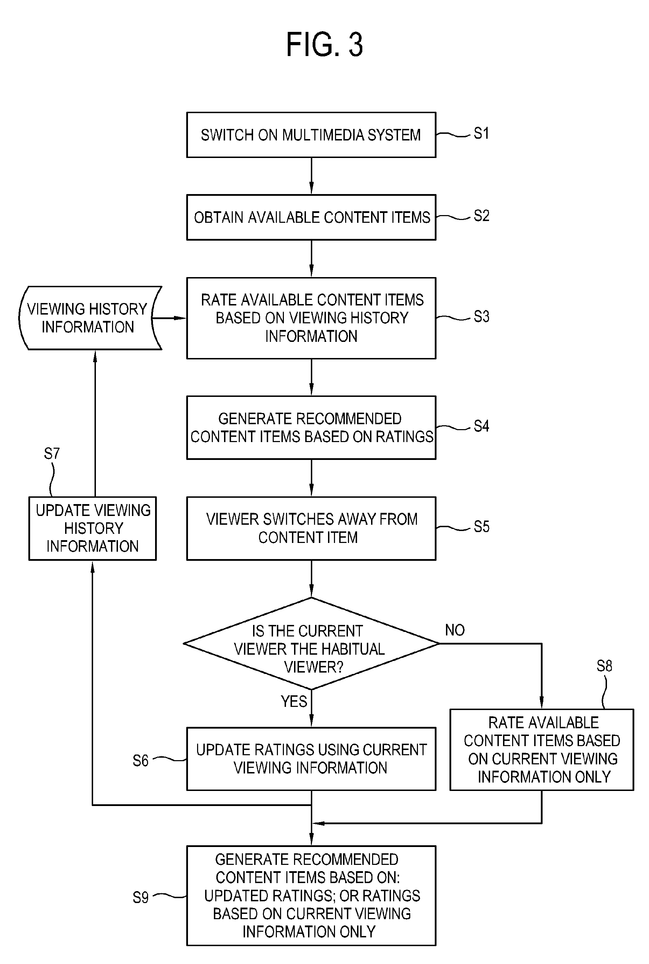

Figure 3 illustrates a flowchart showing a method of recommending content in a multimedia system 100, according to an embodiment of the invention.

After the multimedia system 100 is switched on (step S1), the content obtaining module 201 retrieves all of the content items available for viewing or recording by the viewer (step S2). In an alternative embodiment of the invention, the content managing module 110 may only be activated upon the viewer's command. Therefore, if the viewer chooses not to have his viewing habits monitored for the current session, or does not wish to have any content items recommended to him, the viewer may turn off the content obtaining function by disabling the content managing module 110 for that session.

Once the available content items are retrieved, the content obtaining module 201 provides the available content items to the content rating module 202. The content rating module 202 determines a rating for each of the available content items received from the content obtaining module 201 (step S3). The rating represents the level of interest that a viewer might have in a particular content item available for viewing or recording at a selected time, for example, when the system is switched on. The rating is based on information relating to the viewing history, which is an indication of the viewer's viewing habits. For example, the viewer may have previously viewed the content item, or a particular type of content item, for a significant amount of time during a previous session. This information is stored as the viewing history information and used to rate an available content item. In particular, if the viewer had previously viewed the same type content item for a significant amount of time, the available content item is given a high rating. Furthermore, the information relating to the viewing history includes time information on when the previous content items were viewed. The time information enables the content rating module 202 to identify the viewing history information for a specific time, thereby enabling it to rate the available content items based on time-specific viewing history information. The rating process will be described later in more detail.

The content managing module 110 considers what content items, or types of content item, were viewed by the viewer at a particular time during a previous session. Accordingly, the content rating module 202 determines the rating based on time specific viewing history information. Time specific information means that information is customised depending on at least one of time of the day, day or the week and the date.

Once the ratings of the available content items have been determined, the content recommendation module 205 generates a list of recommended content items based on the ratings (step S4).

When the viewer chooses to view another content item by moving to the next content item (step S5), the content rating module 202 updates the rating based on information relating to the viewer's preference for the current session (step S6). The viewer's preference for the current session may be the viewer's interest for that particular day or time. It may also be an indication of the viewer's interest in a particular content item for the current session. The updating process will be described later in more detail.

If the viewer's choices of content items for a particular session correspond to what the system expects, for example, if the type of content items viewed during a session is consistent with the viewing habits of the viewer, then the initial list of recommended content items may be updated using the ratings determined based on the current viewing interest information (step 6). Thereafter, information relating to the viewer's interest for the current session may be used to update the viewing history information (step S7).

If the viewer's choices of content items for a particular session differ significantly from what the system expects, for example, if the type of content items viewed during a session is not consistent with the viewing habits of the viewer, then the recommended content items for the current session may only be based on the viewer's interest for the current session, and not the viewing history information (step 8). In such circumstances, the information relating to the viewer's interest for the current session is not used to update the viewing history information.

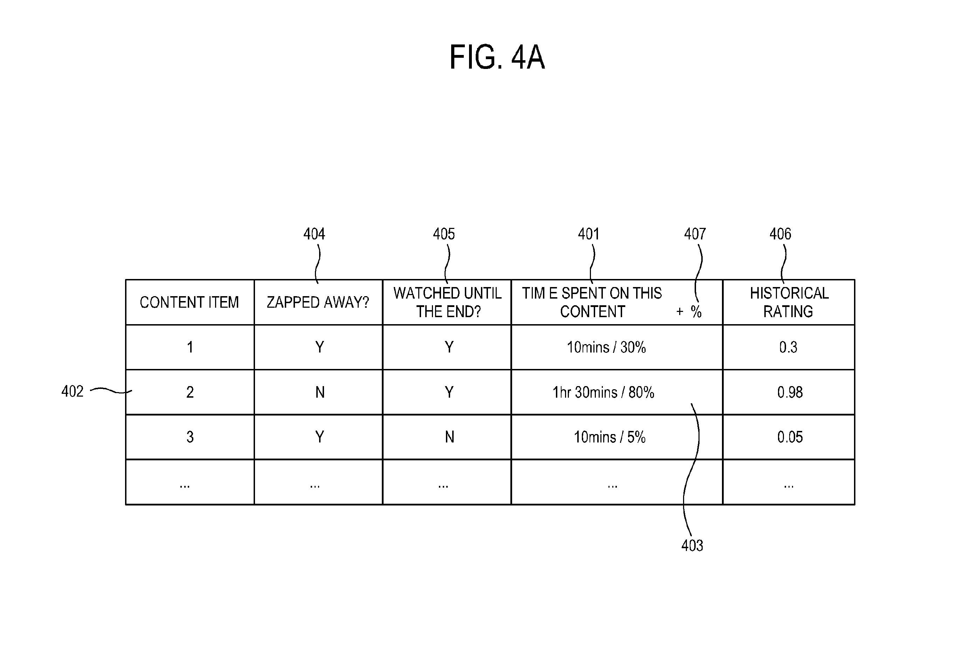

Details of the viewing history information will now be described with reference to Figure 4a. The viewing history information is information relating to the viewing habits of the viewer. Therefore, the viewing history information relates to particular content items that have previously been viewed, for example, during a previous session. The viewing history information may be stored in a memory, hard disk or other storage medium.

Figure 4a illustrates an example of the viewing history information that may be stored. In particular, the viewing history information may include information 401 relating to duration of time for which a content item 401, or a particular type of content item, was viewed in previous sessions. The viewing history information may also include information relating to the percentage of the content item viewed 407 relative to the entire duration of the content item. For example, if the viewer watched a particular content item 402 for 1 hour 30 minutes, and the total duration of that movie was 1 hour 52 minutes, the viewing history information will include the percentage 403 of 80% for that particular content item 402.

The viewing history information may also include information 404 on whether the viewer zapped away from the content item. The term "zap" or "zapping" refers to an action of changing or switching content items, such as changing television channels or radio stations. In another embodiment, if the viewer zapped away, the viewing history information may further comprise information on whether the viewer returned to the content item during the same session.

The viewing history information may include information 405 on whether the content item was viewed to the end.

In another embodiment, the viewing history information may include information on whether the viewer had switched away from a content item during the presentation of predetermined types of content item, such as an advertisement break.

The viewing history information may also include information on whether or not the viewer had actually viewed the content item. Such information may be determined using data from a detection system, including but not limited to a camera, a sensor or a motion detector.

The viewing history information may also include a historical rating 406 which is the rating that was given to the previously viewed content item by the content rating module 202 during the previous sessions. The rating will be described in more detail later.

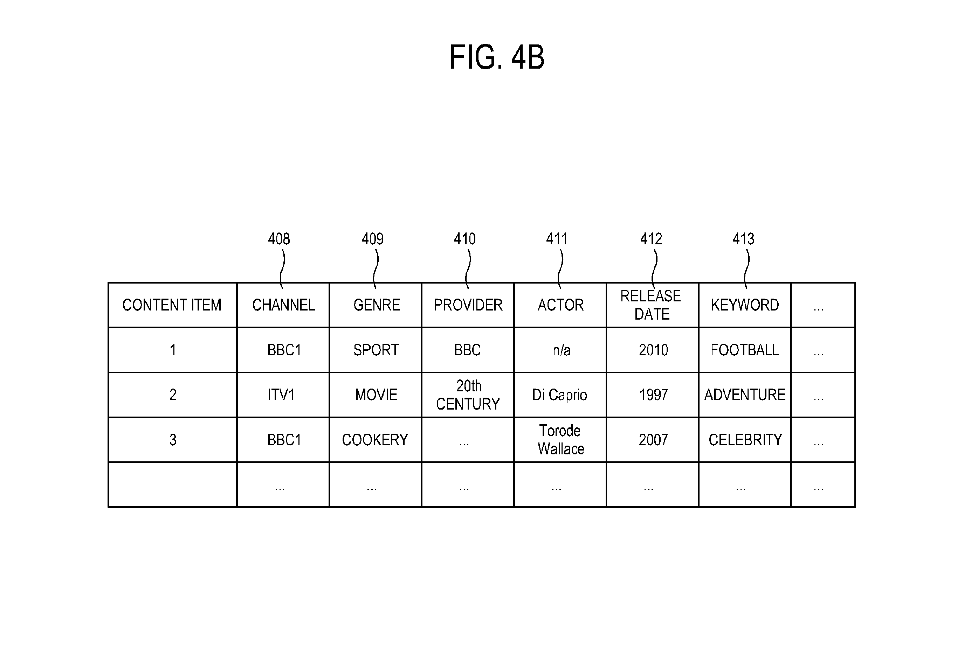

Since the viewing history information is specific to a particular content item that has been previously viewed, metadata for the previously viewed content item is also stored as part of the viewing history information, such that when the viewing history information for a particular content item for a particular time slot is retrieved, metadata associated with the particular content item is also retrieved. Figure 4b illustrates examples of metadata for a previously viewed content item that may be stored as part of the viewing history information in association with that content item. As shown in Figure 4b, the viewing history information for previously viewed content items may include, but is not limited to, information relating to channel 408, genre 409, content provider 410, actor 411, release date 412 and keywords 413.

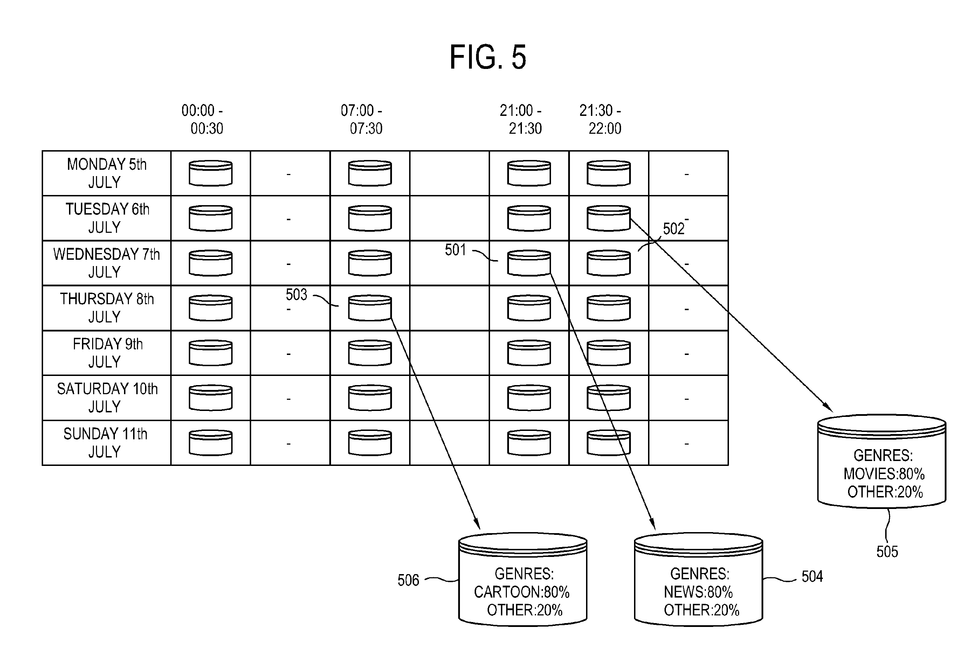

Referring to Figure 5, an example of how the viewing history information is stored in association with a time slot is illustrated.

The viewing history information relates to content items viewed in previous sessions. Therefore, the viewing history information is specific to a time, a day and a date on which the content item was previously viewed. The viewing history information is specific to a time interval defined by a time slot. For example, a day may be made up of 24 time slots with 1-hour intervals.

In the present example, as shown in Figure 5, the viewing history information for a time slot 501 on Thursday 8th July between 07:00 and 07:30 shows that the most viewed genre of content items at this particular time slot was cartoons. For a time slot 502 on Wednesday 7th July between 21:00 and 21:30, the viewing history information shows that the most viewed genre was news, whereas for a time slot 503 on Wednesday 7th July between 21:30 and 22:00, the most viewed genre was movies.

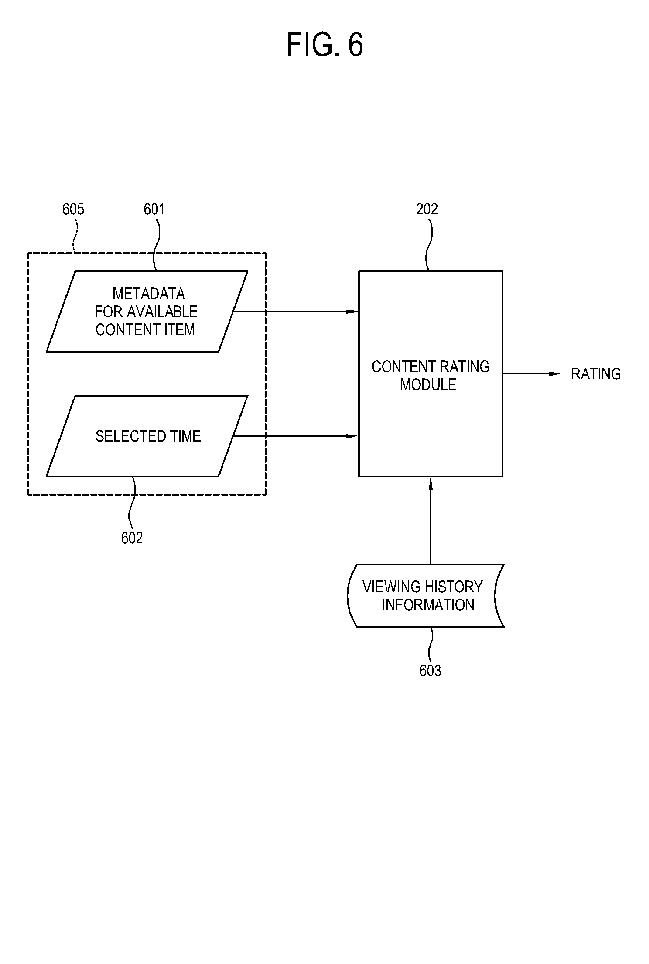

Referring to Figure 6, a content rating module 202 for determining a rating for each of the available content items based on the viewing history information is illustrated.

As shown in Figure 6, the content rating module 202 receives current information 605 relating to the current content items and the viewing history information 603 relating to previously viewed content items.

The current information 605 includes data 601 relating to the available content items and the selected time 602. The data 601 relating to the available content items include, for example, metadata for each of the content items. The selected time 602 represents the time and date at/on which the available content items are to be viewed or recorded.

As explained above, the viewing history information 604 is stored in association with a time slot, and therefore, specific to a time interval defined by the time slot. The content rating module 202 receives the viewing history information 604 stored within the time slot that corresponds to the selected time 602.

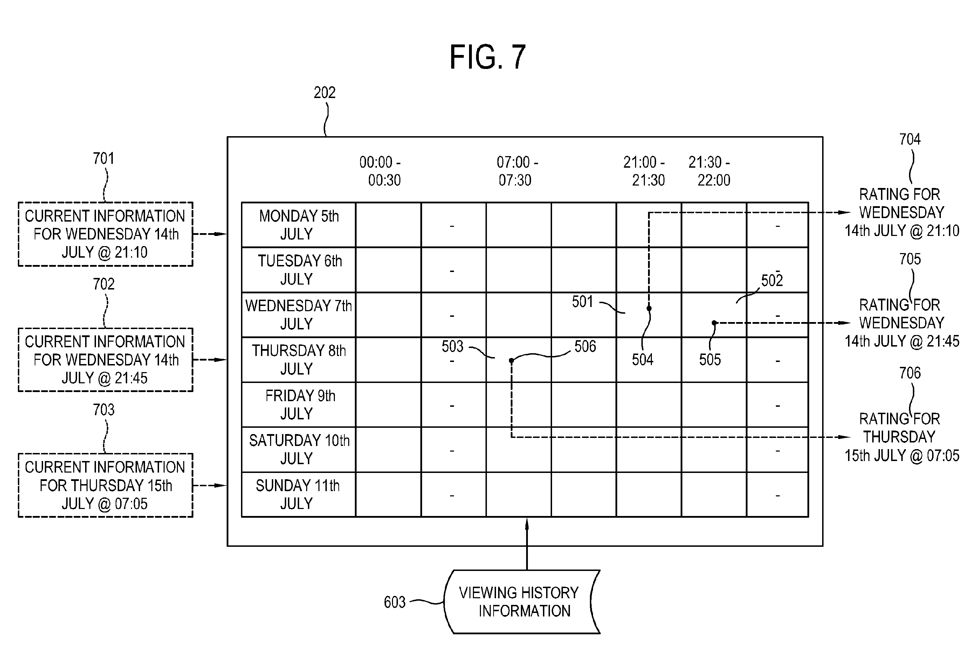

Figure 7 illustrates how the viewing history information 603 for a time slot that corresponds to the selected time is used to determine the ratings. This procedure will be described by way of an example.

When the viewer switches on the system 100 at 21:10 on Wednesday 14th July, the content obtaining module 201 obtains all of the content items available for viewing at that time. Since the available content items are defined by metadata, this means that the metadata for the available content items is obtained by the content obtaining module 201.

Next, the current information 701 specific to the selected time is provided to the content rating module. The current information 701 includes both the metadata for the available content items obtained by the content obtaining module 201 and the information relating to the selected time. The selected time, in this example, is the time at which the system 100 is switched on - i.e. at 21:10 on Wednesday 14th July.

The content rating module 202 also receives the viewing history information 603. Whereas the current information 701 is specific to the selected time, the viewing history information 603 for the previously viewed content items is specific to various time slots in the past. Therefore, when the content rating module 202 is provided with the viewing history information 603, it identifies the relevant time slots required to determine the ratings. For a time slot to be deemed relevant for this purpose, the time slot must correspond to the selected time. The time slot corresponds to the selected time if, for example, the selected time falls within a time interval defined by the time slot, and that time slot is on the same day of the week as the day of the selected time. In the present example, the selected time is 21:10 on Wednesday 14th July. The time interval in which the selected time falls is 21:00-21:30, and the day of the week on which the selected time falls is a Wednesday. Therefore, the time slot which corresponds to the selected time of 21:10 on Wednesday 14th July is 21:00-21:30 on any of the previous Wednesdays. Hence, in the present example, the time slot 501 on Wednesday 7th July at 21:00-21:30 corresponds to the selected time of 21:10 on Wednesday 14th July. Time slots at 21:00-21:30 on any other previous Wednesdays prior to Wednesday 14th July may also correspond to the selected time.

The viewing history information 504 specific to the time slot 501 on Wednesday 7th July at 21:00-21:30 also includes the metadata of the content items viewed during that time slot and, for example, how long each content item was viewed for. Therefore, the viewing history information 504 may include which genre of content items was viewed for the longest duration during a particular time slot. In the present example, the viewing history information 504 for the time slot 501 on Wednesday 7th July at 21:00-21:30 shows that the news genre made up 80% of the total viewing time for that time slot 501.

Next, the content rating module 202 uses the current information 701 and the viewing history information 702 to determine the rating 704 for each content item available at 21:10 on Wednesday 14th July. To achieve this, the content rating module 202 first identifies the relevant time slot 501, and based on the viewing history information 504 for that time slot 501, it determines which genre is preferred by the viewer at the selected time. In the present example, news is the preferred genre, and therefore, the content rating module 202 gives high ratings to the available content items which are categorised as news according to the obtained metadata.

Content item, such as a television programme or a radio show, which has already started at the selected time may be given a lower rating.

Algorithms such as decision tree, neural network, k-nearest neighbors and discriminant analysis may be used to implement the content rating module 202 to calculate the ratings.

In another example, if the system 100 is switched on at 21:45 on Wednesday 14th July, the time slot corresponding to the selected time is 21:30-22:00 on any of the previous Wednesdays. Therefore, the content rating module 202 identifies that the time slot 502 on Wednesday 7th July at 21:30-22:00 corresponds to the selected time. Time slots at 21:30-22:00 on any other previous Wednesdays prior to Wednesday 14th July may also correspond to the selected time. As shown in Figure 5, the viewing history information 505 for this time slot 502 shows that the movie genre made up 80% of the total viewing time for that time slot 502. Accordingly, the content rating module 202 uses the viewing history information 504 for that time slot 501 to determine that movie is the preferred genre. The content rating module 202 then gives high ratings to the available content items which are categorised as movies according to the obtained metadata.

Similarly, if the system 100 is switched on at 07:05 on Thursday 15th July, the time slot corresponding to the selected time is 07:00-07:30 on any of the previous Thursdays. Therefore, the content rating module 202 identifies that the time slot 503 on Thursday 8th July at 07:00-07:30 corresponds to the selected time. Time slots at 07:00-07:30 on any other previous Thursdays prior to Thursday 15th July may also correspond to the selected time. As shown in Figure 5, the viewing history information 506 for this time slot 503 shows that the cartoon genre made up 80% of the total viewing time for that time slot 503. Accordingly, the content rating module 202 will recognise that the cartoon is the preferred genre based on the viewing history information 506 for this time slot 503 and give high ratings to the available content items which are categorised as cartoons according to the obtained metadata.

The time slot may also correspond to the selected time if the selected time falls within a time slot on a predetermined day or date that corresponds to the selected time. For example, a public holiday (e.g. Bank holidays, Christmas) may be set as a predetermined day. In this case, if the selected time is on a public holiday, the viewing history information for the time slots that correspond to that particular public holiday will be used to determine the rating. Accordingly, public holidays will be treated differently from a normal weekday when the information is used to rate the available content items. The system 100 may obtain information regarding public holidays and other predetermined days or dates from the internet or dedicated servers.

The above examples also show how time-based differentiation may also be used to differentiate the different viewers. In particular, the system 100 may determine that a certain genre is associated with a certain viewer or group of viewers. For instance, the system 100 may determine that cartoons are associated with children and news is associated with adults. In this way, time-based differentiation may also be used to offer time specific rating for different viewers.

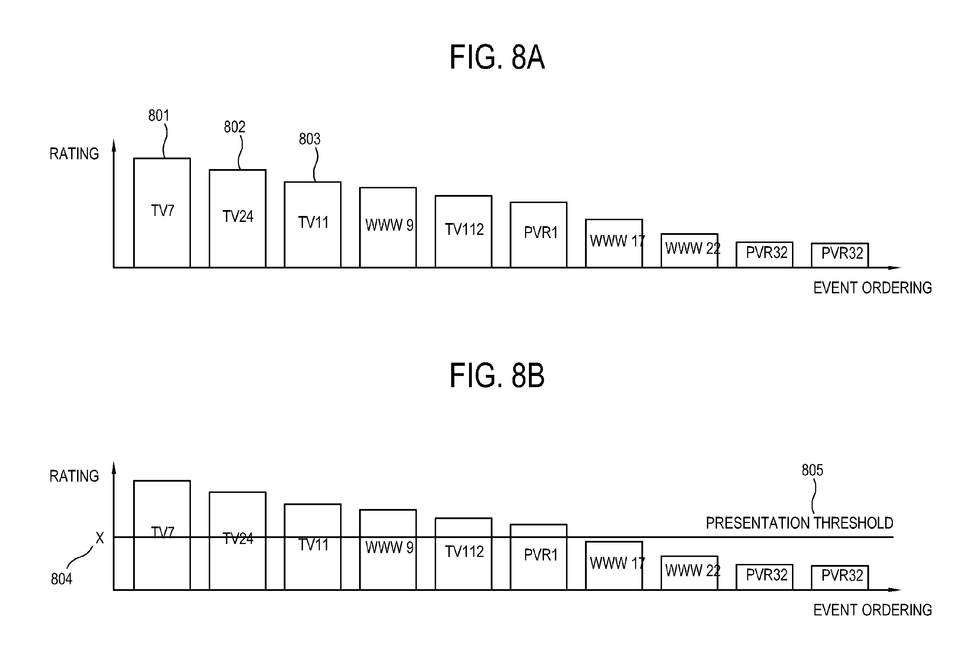

Referring to Figures 8a and 8b, an example of how the ratings calculated by the content rating module 202 is used to determine an initial list of recommended content items for viewing is illustrated.

The content recommendation unit 205 receives from the content rating module 202 ratings for the available content items. The content recommendation unit 205 then determines the initial list of recommended content items based on the ratings. This may be done by listing the available content items by decreasing order of rating. For example, as shown in Figure 8a, the content item 801 with the highest rating (TV7) out of all the available content items would appear first on the initial list of recommended content items. The content item 802 with the second highest rating (TV24) would appear after the first recommended content item 801 (TV7), with the third highest rated content item 803 (TV11) appearing thereafter, and so on.

In an alternative embodiment of the present invention, the list of recommended content items obtained by the content recommendation unit 205 may be used to determine which content items are to be recorded at a time selected by the viewer. For example, if the viewer wishes to record any future content items that may be of interest to him, the content recommendation unit 205 determines which content items are of significant interest to the viewer based on the list of recommended items obtained for a given time in the future. This information is then used when determining which content items to record.

The content recommendation module 205 may apply a presentation threshold to the rated content items and select only those rated content items which have a rating above the presentation threshold 805, as shown in Figure 8b. In this way, rated content items having a rating below the presentation threshold will not be presented to the viewer as recommended content items. For example, as shown in Figure 8b, if the presentation threshold 805 is set at a rating of X 804, only the content items having a rating above X 804 will be presented to the viewer as recommended content items.

Also, if the system 100 is shared by different viewers at a particular time (for example, by the whole family in the morning), the system 100 may generate a list of recommended content items specific to all of the possible viewers for that particular time. For example, if the system 100 determines that previous viewing habits indicate that the system 100 is viewed by different viewers (e.g. both adults and children) in the morning, the system 100 may generate a list of recommended content items suitable for both the adults and the children if the system 100 is switched on in the morning.

Different ways of building a list of recommended content items are available. For example, the viewer may choose to have the selection may be based on genre, in which case, only the most popular genre or type of programme at the specified time is selected as part of the list of recommended content items. In Figure 5, for example, the decision to put a content item in the list of recommended content items was based only on genre.

In another embodiment, the selection may be based on the most popular channel (for a TV-related content). In other embodiments, the selection may be a combination of multiple criteria relating to the content item, including specific genre and type of content item, for example, information on whether the content item is in HD or SD, live or recorded broadcast.

Once the initial list of recommended content items has been determined by the content recommendation module 205, the content rating module 202 updates the rating for one or more of the recommended content items based on the viewing interest of the viewer for the current viewing session. In this way, the system is able to offer fine tuning of the initial list of recommended content items based on the particular interest of the viewer on the day, or at the time, of the current session.

An analysis module 205 determines the information relating to the viewer's current interest for the current viewing session. Such information may comprise information relating to duration of time for which the content item, or that particular type of content item, was viewed during the current viewing session. The information may further comprise information relating to the percentage of the content item viewed in the current viewing session relative to the entire duration of the content item.

The viewer's interest for the current session may also be determined using information on whether the content item was viewed to the end during the current viewing session.

The information relating to the viewer's interest for the current session may also include information on whether the viewer zapped away from the content item during the current viewing session. If the viewer zapped away, the information relating to the viewer's interest for the current session may also include information on whether the viewer returned to the content item during the current session.

The information relating to the viewer's interest for the current session may include information on whether the viewer switched away from a content item during the presentation of predetermined types of content item, such as an advertisement break, during the current session. For example, if the viewer switches away from a content item during the presentation of an advertisement break, the system 100 may determine that the viewer is still interested in the content item and has switched away only because of the advertisement break. The multimedia system 100 may monitor for the advertisement break by analysing metadata defining an advertisement break. In another embodiment, the multimedia system 100 may also analyse the audio-visual parameters relating to the advertisement break, such as volume, luminosity, colour and dynamic range, to monitor for the advertisement break.

If the viewer executes a series of zapping commands during the current session, the zapping sequence is obtained by the analysis module 205. The analysis module 205 then determines which particular content item, from the content items within the obtained zapping sequence, is of interest to the viewer. Such information determined may also be used as the information relating to the viewer's interest for the current session.

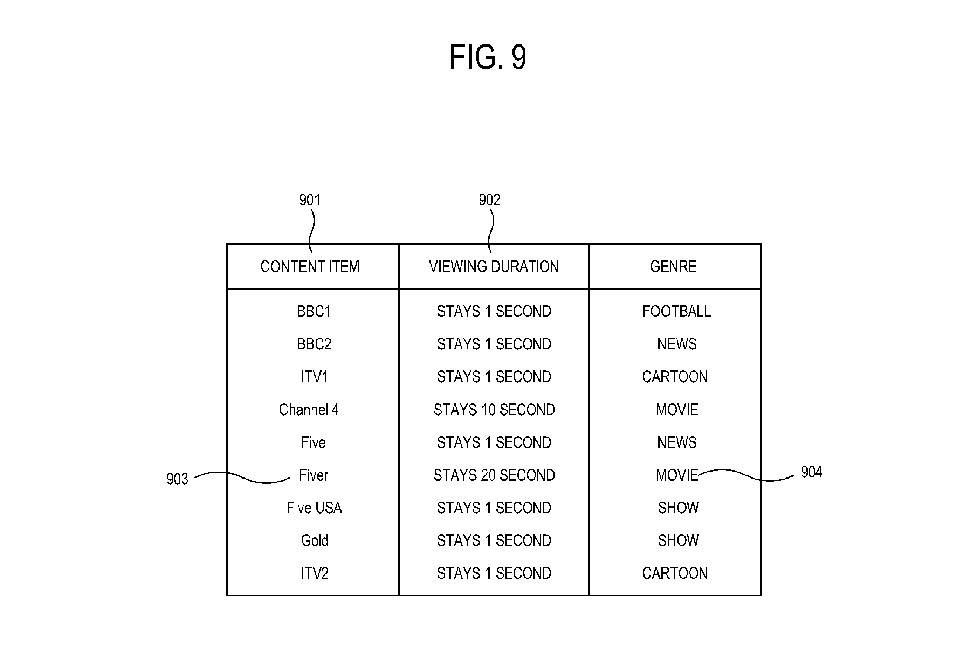

Figure 9 illustrates an example of the zapping sequence. In this example, the viewer zaps through a number of content items 901 (television channels), from BBC1 to ITV2, during a viewing session. When the viewer starts zapping through the content items 901, the analysis module 205 obtains information relating to the zapping sequence. This includes viewing information 902, such as the duration viewed, for each of the content items in the zapping sequence. Then, using the viewing information 902 for the content items in the zapping sequence, the analysis module 205 determines which particular content item the viewer is currently interested in. In the present example, the viewing information 902 will indicate that the viewer spent 20 seconds on a particular item 903, and no more than 10 seconds on the remaining content items in the same zapping sequence. Based on this viewing information, the analysis module 205 determines that the viewer is interested in this particular genre 904 of content item for this viewing session. The analysis module 205 then uses this information as the information relating to the viewer's interest for the current session.

The information relating to the viewer's interest for the current session may include information on whether or not the viewer is viewing the content item in the current session. Such information may be determined using data from a detection system, including but not limited to a camera, a sensor or a motion detector. This way, if the viewer leaves the room for a long time with the multimedia system 100 switched on, the system will detect that the viewer is not present in the room and the duration of viewing time will be decreased accordingly.

The content rating module 202 updates the ratings of the recommended content items on the initial list based on the information relating to the viewer's interest for the current session.

The process of updating the ratings for the recommended content items using the information relating to the viewer's interest for the current session is performed each time the viewer switches from one content item to another.

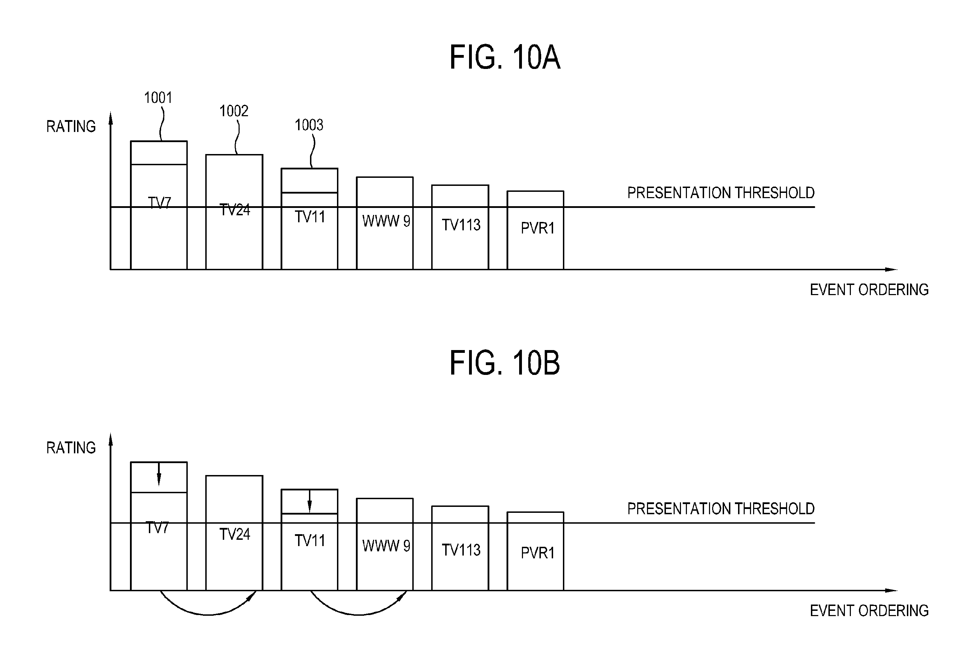

Details of the updating the rating based on the information relating to the viewer's interest for the current session will now be described with reference to Figures 10a to 10c.

If the viewer is not interested in a particular recommended content item, the viewer may tune away from a recommended content item by commanding the system 100 to move between the recommended content items. This may be done, for example, using a remote control having a next button for moving between the recommended content items.

Referring to Figure 10a, as an example, if the viewer is no longer interest in viewing the first recommended content item 1001 with the highest rating (TV7), the viewer may tune away to a next recommended content item by commanding the system 100 to move to a next content item in the recommended content list. Before the next recommended content item 1002 (TV24) is presented to the viewer, the analysis module 205 will determine the information relating to the viewer's interest for the current session. In the present example, since this information will indicate that the viewer wishes to switch away from the first recommended content item 1001 (TV7), the system will determine that the viewer does not like this content item (TV7) for the current session. This current interest information will then be provided to the content rating module 202 and used to update the rating for the recommended content items on the initial list. For example, the content rating module 202 will lower the rating for this particular item, as shown in Figure 10a. The content rating module may also lower the ratings of other items which have been identified as being similar. For example, if a third highest recommended content item 1003 (TV11) is a similar genre to the first recommended content item 1001 (TV7), the rating of the third highest recommended content item 1003 (TV11) will also be lowered, as shown in Figure 10a. The list of recommended content items will then be re-ordered accordingly, as shown in Figure 10b, after which the next recommended content item (TV24) will be presented to the viewer.

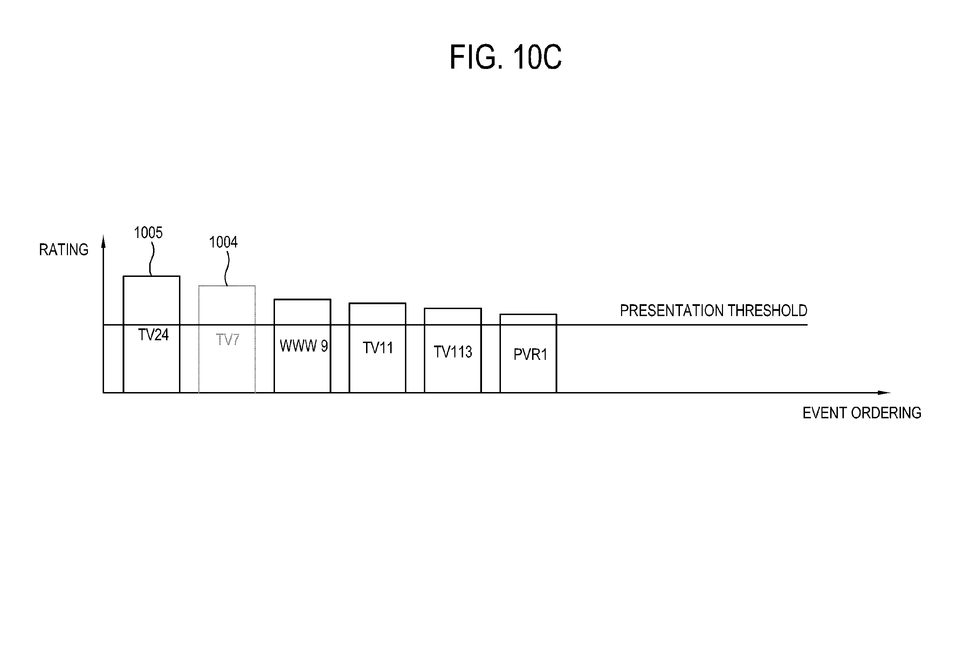

Referring to Figure 10c, if the first recommended content item 1004 (TV7) is moved below the next recommended content item 1005 (TV24) as a result of the viewer switching away, the content recommendation module 205 may not present the first recommended content item 1004 (TV7) as one of the recommended content items next time the viewer commands the system 100 to move between the recommended content items after viewing the next recommended content item 1005 (TV24). In other words, if the viewer zaps away from the next recommended content item 1005 (TV24) having zapped away from the first recommended content item 1004 (TV7), then the first recommended content item 1004 (TV7) will not be presented to the viewer as one of the recommended content items because the viewer had just switched away from the first recommended item 1004 (TV7) during the previous zapping sequence. The first recommended content item 1004 (TV7) will reappear as one of the recommended content items only when the viewer reaches the end of the list of recommended content items and goes back to the start of the list.

The analysis module 205 may selectively update the viewing history information stored in the storage module 204. In particular, the information relating to the viewer's interest for the current session may be used to update the viewing history information only when this information is consistent with the viewer's viewing habits. The viewer's viewing habits may be determined by the analysis module 205 based on the viewing history information. The viewer's interest for the current session may not be consistent with the viewer's viewing habits if, for example, the genre of the content item being viewed in the current session does not coincide with the genres of the content items previous viewed by the viewer during the time slot that corresponds to the time at which the current content item is being viewed. By not updating the viewing history information when the information relating to the viewer's interest for the current viewing session does not correspond to the viewer's viewing habits, the analysis module 205 protects the viewing history information from potential corruption.

Furthermore, if the viewer's interest for the current session is not consistent with the viewing habits of the viewer, then the recommended content items for the current session may be based only on the viewer's interest for the current session, and not on the viewing history information.

Whilst certain embodiments of the present invention have been described above, it will be clear to the skilled person that many variations and modifications are possible while still falling within the scope of the invention as defined by the claims.

## Claims

1. A multimedia system comprising:
a content obtaining module arranged to obtain a plurality of available content items for viewing or recording at a selected time;
a storage module arranged to store viewing history information for content items that have previously been viewed, the viewing history information being stored in association with at least one time slot;
a content rating module arranged to determine a rating for each of the available content items based on the viewing history information for one or more of the time slots that correspond to the selected time; and
a content recommendation module arranged to generate recommended content items based on the rating.

2. The multimedia system of claim 1, further comprising an analysis module arranged to determine viewing interest information relating to a current viewing session.

3. The multimedia system of claim 2, wherein the content rating module is arranged to update the rating for one or more of the recommended content items based on the viewing interest information.

4. The multimedia system of claim 3, wherein the content rating module is arranged to update the rating for the one or more recommended content items when the viewing interest information indicates that the viewer has switched away from one of the recommended content items.

5. The multimedia system of claim 3 or 4, further comprising an input module for receiving a content item selection, wherein the system is arranged to update the rating of a recommended content item when the input module receives a signal indicating that a subsequent content item has been selected.

6. The multimedia system of claim 4 or 5, wherein when the rating of the recommended content item within a recommended content item list has been decreased as a result of a viewer switching away from the recommended content item, the content recommendation module is arranged to suppress presentation of the recommended content item until the viewer returns to the beginning of the recommended content list.

7. The multimedia system of claim 4, 5 or 6, wherein the content rating module is arranged to ignore the information that the viewer has switched away from the recommended content item during the presentation of predetermined types of content item.

8. The multimedia system of claim 7, wherein one of the predetermined types of content item comprises an advertisement break, and
the system is arranged to monitor for the advertisement break based on one or both of metadata defining an advertisement break and audio-visual parameters relating to the advertisement break.

9. The multimedia system of any one of claims 2 to 8, wherein the content rating module is arranged to ignore the viewing interest information when a viewer is not viewing the content item.

10. The multimedia system of claim 9, further comprising a detection system, wherein the multimedia system is arranged to determine from data from the detection system whether the viewer is viewing the content item, and
the detection system comprises a camera or a motion detection system.

11. The multimedia system of any one of claims 2 to 10, wherein the analysis module is arranged to selectively update the viewing history information by storing the viewing interest information that corresponds to the current viewing session in a time slot that corresponds to a time of the current viewing session, depending on whether the viewing interest information for the current viewing session corresponds to the viewing history information.

12. The multimedia system of claim 11, wherein the analysis module is arranged not to update the viewing history information when the viewing interest information for the current viewing session does not correspond to the viewing history information.

13. The multimedia system of any one of claims 2 to 12, wherein the viewing interest information further comprises information relating to one or more of duration of time for which a content item is viewed, the percentage of the content item that is viewed and whether the content item is viewed to the end.

14. The multimedia system of any one of the preceding claims, wherein the plurality of available content items include one or more of television content, radio content, Internet content and previously recorded content.

15. The multimedia system of any one of the preceding claims, wherein the content recommendation module is arranged to apply a presentation threshold to the rated content items, wherein rated content items having a rating below the presentation threshold will not be presented as recommended content items.
